## Europäisches Patentamt

## European Patent Office

## Office européen des brevets

(19)

(11) Veröffentlichungsnummer: **0 219 561 B1**

(12) **EUROPÄISCHE PATENTSCHRIFT**

(45) Veröffentlichungstag der Patentschrift:
**11.01.89**

(51) Int. Cl.⁴: **F42B 13/267**, F42B 5/16

(21) Anmeldenummer: **85113288.6**

(22) Anmeldetag: **19.10.85**

(54) **Treibsatz zur Bodensogreduzierung für ein Artilleriegeschoss.**

(43) Veröffentlichungstag der Anmeldung:
**29.04.87 Patentblatt 87/18**

(45) Bekanntmachung des Hinweises auf die Patenterteilung:
**11.01.89 Patentblatt 89/2**

(84) Benannte Vertragsstaaten:
**BE DE FR GB IT NL SE**

(56) Entgegenhaltungen:
**DE-A- 2 547 528**
**FR-A- 437 228**
**FR-A- 715 614**
**FR-A- 1 603 307**
**FR-A- 2 260 769**
**US-A- 2 955 535**

(73) Patentinhaber: **Rheinmetall GmbH,
Ulmenstrasse 125 Postfach 6609,
D-4000 Düsseldorf(DE)**

(72) Erfinder: **Rahnenführer, Eckhard, In der Lüh 40,
D-4047 Dormagen 11(DE)**
Erfinder: **Jaskolka, Heinz, Hans-Böckler-Strasse 18,
D-5620 Velbert 1(DE)**

(74) Vertreter: **Podszus, Burghart, Dipl.-Phys. et al,
Rheinmetall GmbH Ulmenstrasse 125 Postfach 6609,
D-4000 Düsseldorf(DE)**

**Beschreibung**

Die Erfindung betrifft einen Treibsatz für ein Artilleriegeschoß nach dem Oberbegriff des Patentanspruchs 1.

Es ist aus der DE-A 2 804 270 bekannt, zur Bodensogreduzierung einen "Base-bleed" Treibsatz als Hohlzylinder auszubilden und am Geschoßheck anzuordnen. Die hintere Öffnung des zentralen Zündkanals eines derartigen Treibsatzes enthält aus Gründen der sicheren Handhabung eine Berstscheibe, während am vorderen Ende des Zündkanals eine Anzündeinrichtung angeordnet ist. Beim Abfeuern des Geschosses werden im Rohr durch heiße Gase der Pulvertreibladung die Berstscheibe zerstört und der Base-bleed Satz sowie die Anzündladung der Anzündeinrichtung angezündet.

Unmittelbar nach dem Geschoßaustritt aus dem Rohr kann durch den in der Brennkammer auftretenden starken Druckabfall, beispielsweise von 500 bar auf 1 bar, der Treibsatz wieder gelöscht werden, vor allem dann, wenn die Rohrdurchlaufzeit des Geschosses gering ist und wenn eine schnelle Anzündung des Treibsatztes durch eine glatte Oberfläche der den Zündkanal begrenzenden Wand des Treibsatzes erheblich erschwert wird.

Nach dem Verlassen der Rohrmündung ist es deshalb notwendig, gelöschte Treibsätze durch die Anzündeinrichtung erneut anzuzünden. Bei hohen Mündungsgeschwindigkeiten der Fluggeschosse, beispielsweise größer 800 m/s, entsteht jedoch eine derartige hohe Sogwirkung am Geschoßheck, daß der Anteil an gasförmigen, die Zündung des Treibsatzes bewirkenden Verbrennungsrückständen der Anzündladung innerhalb des Zündkanals auf ein Minimum reduziert wird, wodurch, zusammenwirkend mit der glatten Innenoberfläche der den Zündkanal begrenzenden Wand des Treibsatzes, auch die erneute Anzündung des Treibsatzes durch die Anzündeinrichtung ebenfalls erheblich erschwert wird.

Bei einem dem Oberbegriff des Patentanspruchs 1 entsprechenden Treibsatz nach der US-A 2 955 535 ist innerhalb eines zentralen Zündkanals eine anzündverstärkende Schicht angeordnet. Diese Schicht besteht jedoch nur aus zwei segmentartig und einseitig innerhalb des Zündkanals angeordneten Bändern aus herkömmlichen pyrotechnischen Material, daß keine oberflächenvergrößernd aufgerauhte Struktur aufweist. Durch eine derartige Anordnung und Ausbildung könnte diese Schicht nur einen unzureichenden Beitrag zur Verbesserung der Anzündung eines Base-bleed Satzes leisten.

Demgegenüber ist es Aufgabe der Erfindung, eine Schicht der den Treibsatzzündkanal begrenzenden Wand derartig auszubilden, daß die Anzündempfindlichkeit zur Bodensogreduzierung in der Weise verbessert wird, daß eine sichere Anzündung des Treibsatzes, auch bei geringen Rohrdurchlaufzeiten und hohen Mündungsgeschwindigkeiten unmittelbar nach dem Rohraustritt des Geschosses gewährleistet wird und die Anordnung der Schicht in einfacher Weise auch an bereits gefertigten Treibsätzen ohne nennenswerte Reduzierung des Treibsatzvolumens durchführbar ist.

Gelöst wird diese Aufgabe durch die im Patentanspruch 1 angegebene Erfindung. Die Unteransprüche nennen vorteilhafte Ausgestaltungen und Weiterbildungen der Erfindung.

Dadurch, daß der Base-bleed Treibsatz kanalseitig eine anzündverstärkende Schicht enthält, die aus einer durch Poren oberflächenvergrößernd aufgerauhten Struktur besteht, wird in vorteilhafter Weise, auch bei hoher Sogwirkung, unmittelbar nach dem Rohraustritt des Geschosses im Wandbereich des Zündkanals eine sichere und sofortige Anzündung des Treibsatzes erzielt.

Die sofortige und sichere Zündung des Treibsatzes und somit die sofortige Produktion von Verbrennungsgasen unmittelbar nach dem Geschoßaustritt gewährleistet eine optimale Wirkung des Treibsatzes hinsichtlich der Geschoßreichweite dadurch, daß der durch den Bodensog erzeugte Luftwiderstand des Geschosses direkt nach dem Geschoßaustritt aus dem Rohr vermindert wird und somit maximale Geschoßreichweiten erzielbar sind.

Die Anzündempfindlichkeit des Base-bleed Treibsatzes wird durch die durch Poren oberflächenvergrößernd aufgerauhte Schicht derartig gesteigert, daß gegebenenfalls auf die Anordnung der bekannten Zündeinrichtung des Treibsatzes verzichtet werden kann.

Eine derartige durch Poren aufgerauhte Schicht kann bei geringem fertigungstechnischem Aufwand nachträglich an einem Treibsatz durch Aufkleben einer porösen Treibladungspulverfolie erzielt werden. Des weiteren läßt sich eine derartig durch Poren durchsetzte Oberflächenschicht auch direkt an der den Zündkanal begrenzenden Wand durch die Freiräume herausgelöster anorganischer Salze erzielen. Hierdurch lassen sich besondere dünnwandige poröse Schichten bis 3 mm Schichtdicke herstellen.

Bei einem Einsatz von anzündverstärkenden Schichten aus poröser Treibladungspulverfolie in einer Schichtdicke bis maximal 5 mm, vorzugsweise zwischen 2 mm und 3 mm, garantiert die Porösität eine Erhöhung der Anzündempfindlichkeit und somit eine sichere Zündung des Base-bleed Treibsatzes. Die Reduzierung des Treibsatzvolumens ist durch die Anordnung der durch Poren aufgerauhten Schicht gering, so daß annähernd das volle Treibsatzvolumen zur Produktion von Verbrennungsgasen zur Verfügung steht.

Die Erfindung wird anhand der in den Zeichnungen dargestellten Ausführungsbeispiele des näheren erläutert.

Es zeigt:

Figur 1 einen Querschnitt eines im Geschoßheck angeordneten Treibsatzes,

Figur 2 und Figur 3 in Ausschnittsvergrößerungen der in Figur 1 gekennzeichneten Einzelheit II jeweils eine durch Poren oberflächenvergrößernd aufgerauhte Zündkanalwand, die nach der Figur 2 unmittelbar durch die Zündkanalwand und nach Figur 3 durch eine porenenthaltene Treibladungsfolie gebildet wird.

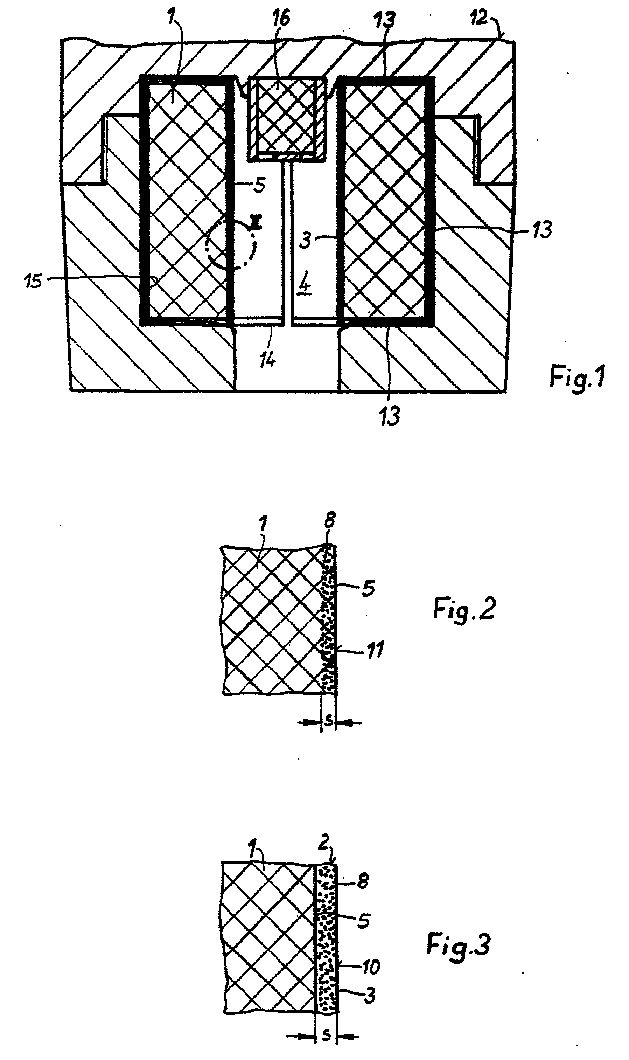

Ein in der Figur 1 dargestelltes heckseitiges Ende eines vorzugsweise bei Mörsern, Panzerhaubitzen oder ähnlichen Rohrwaffen einsetzbaren Artilleriegeschosses 12 enthält zur Bodensogreduzierung einen Treibsatz 1, der in an sich bekannter Weise an den Umfang- und Endflächen mit einer abbrandhemmenden Beschichtung 13 versehen und in einer zusammenschraubbaren Brennkammer 15 angeordnet ist sowie aus mehreren Segmenten bestehen kann.

Der Treibsatz 1 ist als Hohlzylinder ausgebildet, wobei die hintere Öffnung des zentralen Zündkanals 4 aus Gründen der sicheren Handhabung durch eine Berstscheibe 14 verschlossen ist, die beim Abfeuern des Geschosses 12 durch in einem nicht dargestellten Rohr produzierte Gase einer ebenfalls nicht dargestellten Pulvertreibladung zerstört wird. Am vorderen Ende des Anzündkanals 4 ist eine Anzündeinrichtung 16 angeordnet, deren Anzündladung durch die Gase der Pulvertreibladung in an sich bekannter Weise angezündet wird.

Zur sicheren Zündung des Treibsatzes 1 durch die Gase der Pulvertreibladung, bzw. durch die Anzündeinrichtung enthält der Treibsatz 1 kanalseitig, entsprechend den Figuren 2 und 3, eine anzündverstärkende Schicht 2, 11, deren Innenseite 3 oberflächenvergrößernd aufgerauht ist.

Die Struktur der oberflächenvergrößernden Aufrauhung der Treibsatzwand 5, bzw. der Schicht 2 wird hierbei durch Poren erzeugt. Durch diese poröse Struktur der aufgerauhten Schicht 2 wird der Strömungswiderstand der Gase an der Wandoberfläche derart erhöht, daß eine sichere Zündung in den eine große Gesamtoberfläche aufweisenden aufgerauhten Bereich möglich ist. Dadurch wird auch bei hoher Sogwirkung im Wandbereich des Zündkanals 4 eine sichere und sofortige Anzündung des Treibsatzes 1 unmittelbar nach dem Rohraustritt des Geschosses 12 gewährleistet.

Die Figuren 2 und 3 verdeutlichen jeweils eine durch Poren 8 erzeugte oberflächenvergrößernd aufgerauhte Struktur der Wand 5, bzw. der Schicht 2, wobei die Schicht 2 aus einer auf der Wand aufklebbaren porösen Treibladungspulverfolie 10 besteht.

Durch Herauslösen anorganischer Salze in einer aus beispielsweise Treibladungspulver und anorganischen Salzen bestehenden Schicht 11 des Treibsatzes 1 lassen sich sehr dünnwandige poröse Schichten 11 mit einer Schichtdicke s zwischen 1 mm und 3 mm herstellen. Die Schichtdicke s der Treibladungspulverfolie 10 kann maximal 5 mm betragen. Vorzugsweise liegt die Schichtdicke s der Treibladungspulverfolie 10 jedoch in einem Breich zwischen 2 mm und 3 mm.

## Patentansprüche

1. Treibsatz (1) für ein Artilleriegeschoß (12) mit einem durch den Treibsatz (1) hindurchgehenden und eine anzündverstärkende Schicht (2, 11) aufweisenden zentralen Zündkanal (4) und einer Anzündeinrichtung (16), dadurch gekennzeichnet, daß die Innenseite (3) der anzündverstärkenden Schicht (2) eines als "Base-bleed" Satz ausgebildeten Treibsatzes (1) eine durch Poren (8) oberflächenvergrößernd aufgerauhte Struktur aufweist.

2. Treibsatz nach Anspruch 1, dadurch gekennzeichnet, daß die Poren (8) enthaltende Schicht (2) des Treibsatzes (1) aus poröser Treibladungspulverfolie (10) besteht.

3. Treibsatz nach Anspruch 1, dadurch gekennzeichnet, daß die Poren (8) enthaltende Schicht (11) des Treibsatzes (1) aus einem chemisch aufgerauhten Bereich der Wand (5) des Zündkanals (4) besteht, indem die Poren (8) Freiräume herausgelöster anorganischer Salze sind.

4. Treibsatz nach Anspruch 1 und 2, dadurch gekennzeichnet, daß die aus Treibladungspulverfolie (10) bestehende Schicht (2) eine Schichtdicke (s) vorzugsweise zwischen 2 mm und 3 mm, maximal bis 5 mm aufweist.

5. Treibsatz nach Anspruch 1 und 3, dadurch gekennzeichnet, daß die Schichtdicke (s) der chemisch aufgerauhten Schicht (11) in einem Bereich zwischen 1 mm und 3 mm, liegt.

## Claims

1. Pyrotechnic charge (1) for an artillery projectile (12) having a central detonating channel (4) passing through the pyrotechnic charge (1) and provided with a detonation amplifying coating (2, 11) and a detonator device (16), characterised by the fact that the internal side (3) of the detonation amplifying coating (2) of the pyrotechnic charge (1) forming a base burning charge has a structure roughened by pores (8) in such a way as to increase the surface area.

2. Pyrotechnic charge in accordance with claim 1, characterised by the fact that the coating (2) of the pyrotechnic charge (1) containing pores (8) comprises a porous propellant charge powder in the form of a foil.

3. Pyrctechnic charge in accordance with claim 1, characterised by the fact that the coating (11) of the pyrotechnic charge (1) and containing pores (8) comprises a chemically roughened zone of the wall (15) of the detonating channel (4) wherein the pores (8) consist of interstices formed by detached in organic salts.

4. Pyrotechnic charge in accordance with claims 1 and 2, characterised by the fact that the coating (2) or propellant charge powder foil (10) has a layer thickness (s) of preferably between 2 mm and 3 mm, and a maximum of 5 mm.

5. Pyrotechnic charge in accordance with claims 2 and 3, characterised by the fact that the layer thickness (s) of the chemically roughened coating (11) is situated over a zone of between 1 mm and 3 mm.

## Revendications

1. Charge propulsive (1) pour un projectile d'artillerie (12) comportant un canal d'allumage central (4) traversant la charge propulsive (1) et présentant une couche (2, 11) renforçant l'allumage, et un dispositif d'allumage (16), caractérisée en ce que le côté intérieur (3) de la couche (2) d'une charge propulsive (1) réalisée sous forme de charge de culot dit "base-bleed", comporte une structure rendue rugueuse par des pores (8) pour augmenter la surface.

2. Charge propulsive selon la revendication 1, caractérisée en ce que la couche (2) de la charge propulsive (1) comportant des pores (8) est constituée par une feuille poreuse de poudre de charge propulsive (10).

3. Charge propulsive selon la revendication 1, caractérisée en ce que la couche (11) de charge propulsive (1) comportant les pores (8) est constituée par une zone de la paroi (5) du canal d'allumage (4) rendue chimiquement rugueuse par le fait que les pores (8) sont constitués par les volumes libérés par l'élimination des sels inorganiques.

4. Charge propulsive selon les revendications 1 et 2, caractérisée en ce que la couche (2) constituée par une feuille de poudre de charge propulsive (10) a une épaisseur (s) comprise de préférence entre 2 mm et 3 mm, allant au maximum jusqu'à 5 mm.

5. Charge propulsive selon les revendications 1 et 3, caractérisée en ce que l'épaisseur (s) de la couche (11) rendue chimiquement rugueuse, est située dans une plage comprise entre 1 mm et 3 mm.

Fig.1

Fig.2

Fig.3